# EUROPÄISCHE PATENTSCHRIFT

(11) **EP 1 084 601 B1**
(45) Veröffentlichungstag und Bekanntmachung des Hinweises auf die Patenterteilung: **17.03.2004**
(21) Anmeldenummer: 00108513.3
(22) Anmeldetag: 19.04.2000
(51) Int. Cl.: A01B 59/041

(54) **Seitenstrebe für einen Unterlenker eines Traktors**
Tractor lower hitch arm side strut
Traverse latérale pour bras de levage inférieur de tracteur

(30) Priorität: 17.09.1999 DE 19944749
(43) Veröffentlichungstag der Anmeldung: 21.03.2001
(73) Patentinhaber: GKN Walterscheid GmbH, 53797 Lohmar (DE)
(72) Erfinder: Wagner, Gunter, Dipl.-Ing., 34466 Wolfhagen (DE); Vollmer, Jürgen, Dipl.-Ing., 53797 Lohmar (DE)
(74) Vertreter: Harwardt, Günther, Dipl.-Ing.

(56) Entgegenhaltungen:
- DE-B- 1 273 891
- DE-C- 19 744 328
- US-A- 2 878 043

## Beschreibung

Die Erfindung betrifft eine Seitenstrebe für einen Unterlenker eines Traktors.

Seitenstreben werden dafür benutzt, die Unterlenker eines Traktors, die seitlich schwenkbar sind, zumindest zeitweise gegen eine Auslenkung zu stabilisieren bzw. so auszubilden, daß beim Anheben eines Gerätes automatisch eine Mittenzentrierung des Gerätes und damit der Unterlenker im Verhältnis zur Traktorlängsachse eintritt. Des weiteren dienen die Seitenstreben dazu, die Unterlenker auf einem vorgegebenen Spreizmaß entsprechend der Kategorie des anzuhängenden Gerätes zu halten, um das Gerät automatisch, d.h. vom Fahrersitz aus kuppeln zu können.

Die DE 197 44 328 Cl beschreibt eine Seitenstrebe, die an den Unterlenkern eines Traktors einsetzbar ist. Sie umfaßt einen einfachwirkenden Hydraulikzylinder, der einen Kolben und ein Zylindergehäuse aufweist. Die zum Kolben gehörende Kolbenstange ist endseitig aus dem Zylindergehäuse herausgeführt und trägt erste Anschlußmittel zur Verbindung mit entsprechenden Anschlußmitteln am Heck des Traktors.

An das Zylindergehäuse schließt sich axial ein Hohlzylinder an, in dem ein stangenförmiges Stellelement verstellbar einsitzt. Dieses ist durch zwei beabstandete Führungsringe in dem Hohlzylinder geführt und wird durch eine zwischen den Führungsringen angeordnete Druckfeder zu einer eingefahrenen Stellung beaufschlagt, in der sich das Stellelement mit einer Stirnfläche gegen den Boden des Zylindergehäuses abstützt. Der Kolben und das Stellelement sind gegenläufig ausfahrbar. In dem bei eingefahrenem Stellelement aus dem Hohlzylinder herausragenden Ende des Stellelementes ist eine Gewindebohrung angebracht, in welche eine Gewindestange eingreift, an der die zweiten Anschlußmittel zur Verbindung mit einem zugehörigen Unterlenker angebracht sind. Für die bei modernen Traktoren vorherrschenden Einbauverhältnisse ist die aus der Hintereinanderanordnung des Zylindergehäuses, des Hohlzylinders und der Stelleinrichtung für die Kategorieeinstellung mit der Gewindebohrung und der Gewindestange resultierende axiale Bandlänge zu groß, so daß der Pendelweg des Unterlenkers eingeschränkt wird.

Des weiteren ist von Nachteil, daß bei einer Betätigung des Stellelementes die einmal eingestellte Position nicht gesichert ist, da während des Betriebes ein unbeabsichtigtes Drehen des Stellelementes eintreten kann. Dies führt zu einer Längenveränderung.

Der Erfindung liegt die Aufgabe zugrunde, eine Seitenstrebe zu schaffen, bei der die mittels der Gewindestange eingestellte Basislänge für eine bestimmte Kategorie oder für ein bestimmtes Anbaugerät solange erforderlich eingestellt bleibt, d.h. sich nicht selbsttätig unter Betriebsbedingung ändert. Des weiteren ist es Aufgabe der vorliegenden Erfindung, eine Seitenstrebe vorzuschlagen, bei der Einstellungen nur in der zentrierten Position der Unterlenker vorgenommen werden können.

Diese Aufgabe wird erfindungsgemäß durch eine Seitenstrebe gelöst, die einen einfach wirkenden Hydraulikzylinder mit einem Kolben und einem Zylindergehäuse als Bauteilen, eine Stelleinheit, die einen Hohlzylinder mit einer Längsachse, ein stangenförmiges Stellelement, das im Hohlzylinder entlang der Längsachse zwischen einer eingefahrenen und einer ausgefahrenen Stellung verstellbar ist und das eine Gewindebohrung besitzt, die auf der Längsachse zentriert ist und von einer aus dem Hohlzylinder herausragenden Stirnfläche ausgeht, ferner einen Betätigungshebel, der an dem aus dem Hohlzylinder herausragenden Ende des Stellelementes angebracht ist und des weiteren ein erstes Halteelement, das außen an dem dem Zylindergehäuse entfernten Ende des Hohlzylinders angebracht ist und an dem der Betätigungshebel, eine Drehung des Stellelementes zum Hohlzylinder verhindernd, eine Relativverstellung derselben zueinander entlang der Längsachse jedoch zulassend festlegbar ist, aufweist, eine Gewindestange, die in der Gewindebohrung des Stellelementes verstellbar einsitzt, und ein zweites Haltelement, das an einem der Bauteile des Hydraulikzylinders festgelegt ist und einerseits das erste Halteelement zu dem Bauteil undrehbar und entlang der Längsachse dazu relativverstellbar hält und andererseits bei einer von der voll ausgefahrenen Position des Kolbens abweichenden Stellung das Stellelement undrehbar hält, umfaßt.

Von Vorteil bei dieser Ausbildung ist, daß das Stellelement sowohl zum Hohlzylinder als auch zum Zylindergehäuse bzw. Kolben keine Drehbewegung um die Längsachse außerhalb der konstruktiv vorgesehenen Drehspiele ausführen kann. Darüber hinaus wird gewährleistet, daß eine Verstellung der Gewindeverbindung, bestehend aus der Gewindebohrung des Stellelementes und der Gewindestange, nur dann ausgeführt werden kann, wenn sich der Kolben im Verhältnis zum Zylinder in einer ausgefahrenen Position befindet. Diese Position entspricht der zentrierten Position für die Unterlenker, welche in dieser Stellung dann so zueinander eingestellt werden können, daß sie das aufgrund der Geräteauswahl erforderliche Spreizmaß einnehmen und darüber hinaus, wenn erforderlich, bei angehängtem Gerät noch eine Spielunterdrückung erzielbar ist.

Für eine erste Ausführungsform ist vorgesehen, daß der Hohlzylinder Teil des Kolbens des Hydraulikzylinders ist. Eine solche Ausbildung hat den Vorteil, daß eine sehr kompakte Baulänge für die Seitenstrebe erzielt wird. Es ist jedoch auch eine Anordnung möglich, bei der der Hohlzylinder mit dem Zylindergehäuse des Hydraulikzylinders auf der Längsachse zentriert verbunden ist. Es erfolgt also eine Hintereinanderanordnung derselben.

Die erste Ausführungsform ist des weiteren dadurch gekennzeichnet, daß das zweite Halteelement am Zylindergehäuse angebracht ist, wobei das erste Halteelement entlang der Längsachse am zweiten Haltelement verstellbar geführt ist und in Drehrichtung um die Längsachse undrehbar gehalten ist.

Für die zweite Ausführungsform ist vorgesehen, daß das zweite Halteelement am Kolben festgelegt ist, wobei das erste Halteelement entlang der Längsachse am zweiten Halteelement verstellbar geführt ist und in Drehrichtung um die Längsachse unverstellbar gehalten ist.

Bei beiden Ausführungsformen ist der Betätigungshebel um eine Achse, die die Längsachse mit Abstand kreuzt, schwenkbar am Stellelement angebracht. Das erste Halteelement ist gabelartig gestaltet und weist eine Gabelöffnung auf, in welche der Betätigungshebel im Ruhezustand eingreift. Hierdurch wird eine Drehsicherung erzielt, die auch dann bestehen bleibt, wenn sich der Kolben des einfachwirkenden Hydraulikzylinders in der ausgefahrenen Position befindet.

Dabei sorgt das zweite Halteelement auch dafür, daß der Kolben bzw. das Zylindergehäuse zum Hohlzylinder keine Drehbewegung ausführen kann.

Zur Realisierung der undrehbaren Halterung des Stellelementes, solange sich der Kolben des Hydraulikzylinders nicht in der voll ausgefahrenen Position befindet, ist vorgesehen, daß der Betätigungshebel in Eingriff zu einem Führungsschlitz ist, wenn der Kolben im Zylindergehäuse eine von der voll ausgefahrenen Stellung abweichende Stellung einnimmt.

Zur Drehsicherung des Stellelementes im Verhältnis zu dem Bauteil, an dem das zweite Halteelement befestigt ist, ist vorgesehen, daß das zweite Halteelement einen Führungsschlitz, der parallel zur Längsachse verläuft, aufweist, wobei das erste Halteelement in dem Führungsschlitz geführt ist. Dieser Führungsschlitz kann dabei auch zur Führung des Betätigungshebels genutzt werden, der den Betätigungshebel nur in der voll ausgefahrenen Position des Hydraulikzylinders freigibt.

Für die Ausgestaltung des zweiten Halteelementes sind zwei grundsätzliche Möglichkeiten gegeben. Es ist möglich, das zweite Halteelement als Blechteil zu gestalten. Dabei kann dieses so angeordnet werden, daß es parallel zur Längsachse verläuft und axial vom Zylindergehäuse vorsteht. Es ist an diesem beispielsweise durch Schrauben festgelegt. Alternativ ist es möglich, das zweite Halteelement rohrförmig zu gestalten und so anzuordnen, daß es den Hohlzylinder koaxial umgibt. Es kann dabei an der zum Kolben gehörenden Kolbenstange festgelegt sein. Alternativ ist auch eine Befestigung am Zylindergehäuse möglich, wenn die ineinandergeschachtelte Anordnung gemäß der ersten Ausführungsform gewählt wird.

Bevorzugte Ausführungsbeispiele der Erfindung und deren Zuordnung zu den Unterlenkern eines Traktors sind anhand der Zeichnungen näher beschrieben.

Es zeigt
- Figur 1: eine Draufsicht auf eine schematische Darstellung der Unterlenker einer Drei-Punkt-Anbauvorrichtung eines Traktors und die Zuordnung von Seitenstreben zu diesen,
- Figur 2: eine erste Ausführungsform einer erfindungsgemäßen Seitenstrebe im Längsschnitt, wobei sich der Hydraulikzylinder in der ausgefahrenen Position befindet,
- Figur 3: eine Draufsicht zu Figur 2,
- Figur 4: eine weitere Draufsicht, jedoch bei eingefahrener Position des Hydraulikzylinders, und
- Figur 5: einen Längsschnitt durch eine weitere Ausführungsform einer Seitenstrebe.

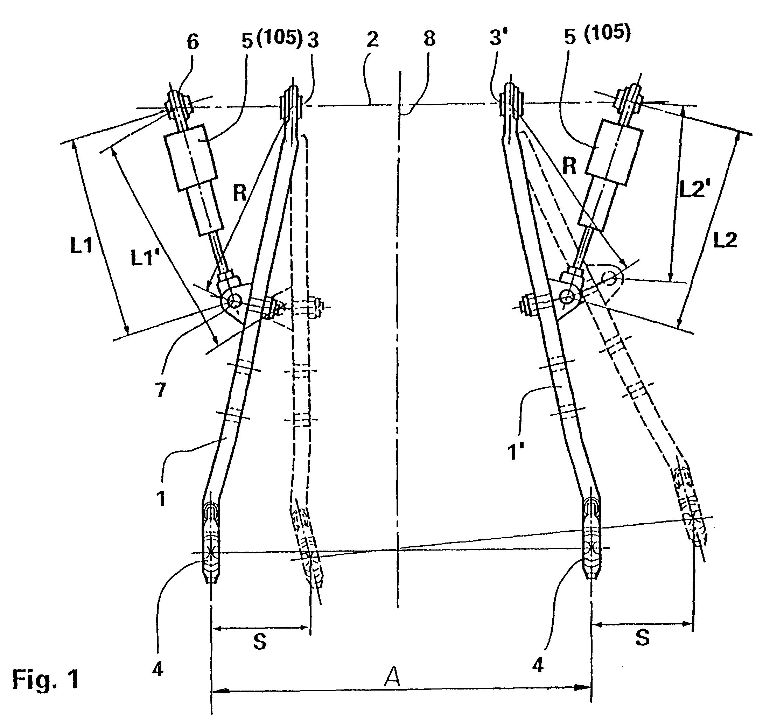

Figur 1 zeigt eine Draufsicht auf zwei Unterlenker 1, 1', welche um eine Schwenkachse 2 mittels entsprechender Anschlußmittel an den Befestigungsstellen 3, 3' am Heck eines Traktors schwenkbar angeordnet sind. Die beiden Befestigungsstellen 3, 3' sind mit gleichem Abstand seitlich zur Traktorlängsachse 8 versetzt angeordnet. Die beiden Unterlenker 1, 1' können sowohl Seiten- als auch Hubbewegungen, d.h. Schwenkbewegungen um die Schwenkachse 2 nach oben bzw. unten, also aus der Blattebene heraus bzw. in die Blattebene hinein und, wie auch ersichtlich, beispielsweise aus der in ausgezogenen Linien dargestellte zu der gestrichelt gezeichneten Position seitlich um das Maß S ausführen. Zur Stabilisierung, d.h. zur Verhinderung von seitlichen Bewegungen der beiden Unterlenker 1, 1' sind die Seitenstreben 5, 105 nutzbar. An den beiden freien Enden der Unterlenker 1, 1' sind Kupplungshaken 4 angeordnet, welche der Aufnahme entsprechender Kuppelmittel an einem Gerät dienen, um das Gerät zu ziehen oder im Zusammenwirken mit einem nicht dargestellten Oberlenker, der üblicherweise auf der Traktorlängsachse 8 zentriert oberhalb der Schwenkachse 2 angeordnet ist, zu tragen. Die beiden Seitenstreben 5, 105 sind mit einem Ende mittels erster Anschlußmittel 6 seitlich versetzt zu den Befestigungsstellen 3, 3' an entsprechenden und auf der Schwenkachse 2 zentrierten Befestigungsmitteln des Taktorhecks festgelegt. Mittels der am anderen Ende der Seitenstreben 5, 105 vorgesehenen zweiten Anschlußmittel 7 sind diese jeweils mit einem Unterlenker 1, 1' verbunden. Die Anschlußmittel 6, 7 erlauben eine Schwenkbeweglichkeit. Es ist ferner aus Figur 1 ersichtlich, daß die Schwenkachsen der Anschlußmittel 7 mit einem Radius R zu den Befestigungsstellen 3, 3' angeordnet sind und somit eine Schwenkbewegung mit dem Radius R ausführen. Tritt bei angehängtem Gerät eine Seitenbewegung S an beiden Unterlenkern 1, 1' auf, wobei eine Verlagerung der beiden Unterlenker 1, 1' von der in durchgezogenen Linien zu der gestrichelt dargestellten Position stattfindet, so ergibt sich für die beiden Unterlenker 1, 1' ausgehend von gleichgroßen Abständen L1 bzw. L2 zwischen den Schwenkachsen der Anlenkstellen 6, 7 eine Veränderung derart, daß sich für den Unterlenker 1 das Maß L1 auf L1' verlängert, während das Maß L2 sich auf L2' verkürzt. Dabei sind die Längenänderungen größenmäßig unterschiedlich. Bei einer Verschwenkung der Unterlenker 1 bzw. 1' um die Befestigungsstellen 3 bzw. 3' im rechtsschwenkenden Sinne würde entsprechend die Länge L1 verkürzt und die Länge L2 verlängert. Bei der konstruktiven Festlegung der möglichen Verkürzung muß darauf geachtet werden, daß beispielsweise der Unterlenker 1' in seiner gestrichelten Position nicht gegen die Hinterräder anschlagen kann. Ferner dienen die beiden Seitenstreben 5, 105 dazu, das angehängte Gerät auf der Traktorlängsachse 8 zentriert zu halten, wenn dieses sich beispielsweise im angehobenen Transportzustand befindet. Gleiches gilt auch dann, wenn kein Gerät angehängt ist und die Unterlenker 1, 1' sich in Transportposition befinden. Die beiden Seitenstreben 5, 105 sollen in diesem Zustand dafür sorgen, daß die Unterlenker 1, 1' so gehalten werden, daß sie sich seitlich nicht von dem eingestellten Spreizmaß A von der Traktorlängsachse 8 nach außen in Richtung auf die Hinterräder bewegen können. Das Spreizmaß A zwischen den Kupplungshaken 4 der beiden Unterlenker 1, 1' kann durch in die Seitenstreben 5, 105 integrierte Teleskopverstellungen, die von Hand einstellbar sind, eingestellt werden, wenn Geräte mit einer von der jeweils eingestellten Kategorie abweichenden Kategorie gekuppelt werden sollen.

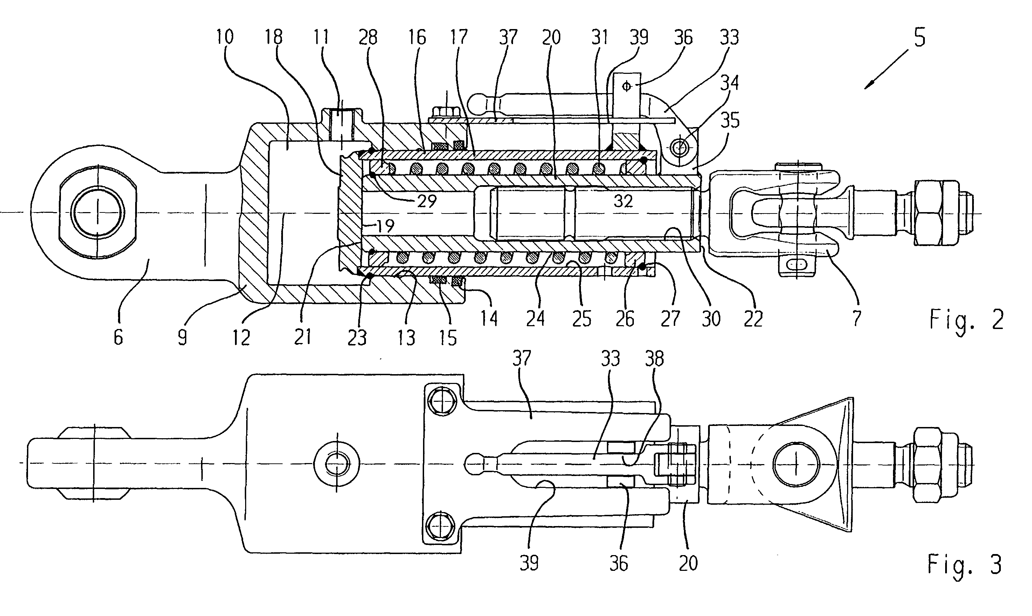

Aus Figur 2 ist eine Seitenstrebe 5 im vergrößerten Maßstab im Verhältnis zu Figur 1 im Längsschnitt zu erkennen. Die Seitenstrebe 5 umfaßt einen einfachwirkenden Hydraulikzylinder mit dem Zylindergehäuse 9 und dem Kolben 16. Das Zylindergehäuse 9 umfaßt einen Zylinderraum 10, der an einem Ende durch einen Boden verschlossen ist und an seinem anderen Ende eine Führungsbohrung 13 aufweist, die auf der Längsachse 12 zentriert ist. Des weiteren ist eine in den Zylinderraum 10 mündende Anschlußbohrung 11 vorgesehen. An diese ist eine Druckmittelleitung anschließbar, die beispielsweise hydraulisch mit dem Hubwerk des Traktors für die Unterlenker oder mit einer separaten Druckquelle unter Zwischenschaltung von Steuerelementen verbunden ist. An das Zylindergehäuse 9 sind des weiteren die ersten Anschlußmittel 6 angeschlossen, die beispielsweise in Form eines Kugelauges vorgesehen sind. An dem den ersten Anschlußmitteln 6 entfernten Ende der Führungsbohrung 13 sind ein Abstreifer 14 und eine Dichtung 15 hintereinandergeschaltet angeordnet. In der Führungsbohrung 13 ist der Kolben 16 verschiebbar angeordnet. Der Kolben 16 besteht aus einem Hohlzylinder 17, der an einem Ende durch einen Boden 18 verschlossen ist. Die zum Innenraum des Hohlzylinders 17 weisende Bodenfläche des Bodens 18 ist mit 19 bezeichnet. Zum Boden 18 hin ist in der Außenfläche des Hohlzylinders 17 eine Nut angebracht, in der ein Anschlagring 23 einsitzt, der die Ausfahrbewegung des Kolbens 16 aus dem Zylindergehäuse 9 begrenzt. In Figur 2 ist der Kolben 16 in seiner maximal ausgefahrenen Stellung dargestellt. Der Kolben 16 stützt sich über den Anschlagring 23 gegen eine entsprechende Fläche im Übergang zwischen dem Zylinderraum 10 und der Führungsbohrung 13 ab. In dem Hohlzylinder 17 ist ein stangenförmiges, insbesondere rohrförmiges, Stellelement 20 entlang der Längsachse 12 verstellbar aufgenommen. In Figur 2 ist das Stellelement 20 in seiner eingefahrenen Position zum Kolben 16 bzw. Hohlzylinder 17 dargestellt. Dabei liegt das Stellelement 20 mit seiner ersten Stirnfläche 21 gegen die Bodenfläche 19 an. Das Stellelement 20 ist im Verhältnis zu dem Hohlzylinder 17 mittels zweier Führungsringe 26, 28 geführt, die auf seiner Außenfläche 24 sitzen. Der erste Führungsring 26 ist nahe zu dem dem Boden 18 entfernten Ende des Hohlzylinders 17 angeordnet und an der Innenfläche 25 des Hohlzylinders 17 geführt, sowie gegen einen im Hohlzylinder 17 festgesetzten Sicherungsring 27 in Anlage, so daß er nicht aus dem Hohlzylinder 17 herausbewegt werden kann. Der zweite Führungsring 28 ist nahe zum Boden 18 angeordnet und auf der Außenfläche 24 des Stellelementes 20 in Richtung zum Boden 18 durch einen Sicherungsring 29 festgelegt. Der zweite Führungsring 28 ist an der Innenfläche 25 des Hohlzylinders 17 geführt. Zwischen den beiden Führungsringen 26, 28 sind Federmittel in Form einer Druckfeder 31 angeordnet. Diese beaufschlagt das Stellelement 20 in Richtung zum Boden 18, so daß dieses mit der ersten Stirnfläche 21 in Anlage zur Bodenfläche 19 gehalten wird. Die Druckfeder 31 ist koaxial um das Stellelement 20 und in dem Hohlzylinder 17 angeordnet. Das Stellelement 20 weist eine durchgehende und auf der Längsachse 12 zentrierte Bohrung auf, wobei der von der zweiten Stirnfläche 22 des Stellelementes ausgehende Teil als Gewindebohrung 30 gestaltet ist, in der eine Gewindestange 32 verstellbar einsitzt. Die Gewindebohrung 30 ist im eingefahrenen Zustand des Stellelementes 20 im Verhältnis zum Hohlzylinder 17 mit einem Teil ihrer Länge im Hohlzylinder 17 angeordnet. Ein geringer Teil des Stellelementes 20 ragt im eingefahrenen Zustand über das dem Boden 18 abgewandte Ende des Hohlzylinders 17 axial hinaus. An diesem Ende ist ein Halter 35 angebracht, an dem ein Betätigungshebel 33 um die Schwenkachse 34 schwenkbar befestigt ist. Im inaktiven Zustand, das ist der in Figur 2 gezeigte Zustand, befindet sich der Betätigungshebel 33 in der Gabelöffnung 38 zwischen zwei Gabelarmen eines ersten Halteelementes 36, das das Stellelement 20 im Verhältnis zum Kolben 16 undrehbar hält, so daß ein Drehen des Stellelementes 20 um die Längsachse 12 nicht möglich ist. Die Gewindestange 32 trägt darüber hinaus die zweiten Anschlußmittel 7. Diese dienen zur Anbringung an einem Unterlenker. Durch die ineinandergeschachtelte Bauweise wird eine extrem kurze Einbaulänge erzielt.

Nachfolgend werden die Mittel zur Drehsicherung des Stellelementes 20 anhand der Figuren 2 bis 4 näher beschrieben. Das erste Haltelement 36 ist gabelförmig ausgebildet, so daß sich eine Gabelöffnung 38 zwischen den Gabelarmen ergibt, in die der Betätigungshebel 33 nach Schwenken um die Schwenkachse 34 in Richtung auf den Außenumfang des Zylindergehäuses 9 bzw. des Hohlzylinders 17 zu eingreift. Das Stellelement 20 ist dann im Verhältnis zum Hohlzylinder 17, an dem das erste Halteelement 36 angebracht ist, undrehbar gehalten. Zusätzlich ist ein zweites Halteelement 37 vorgesehen, das als Blechteil gestaltet ist und mittels Schrauben an dem dem ersten Anschlußmittel 6 entfernten Ende des Zylindergehäuses 9 festgelegt ist und von diesem Ende in Richtung auf das zweite Anschlußmittel 7 vorsteht. Es weist einen von dem dem Zylindergehäuse 9 entfernten Ende ausgehenden Führungsschlitz 39 auf, in dem das erste Halteelement 36 ständig geführt ist. Es führt in diesem Führungsschlitz 39 eine Relativbewegung zum zweiten Halteelement 37 aus, wenn der Kolben 16 in das Zylindergehäuse 9 ein- oder aus diesem ausgefahren wird.

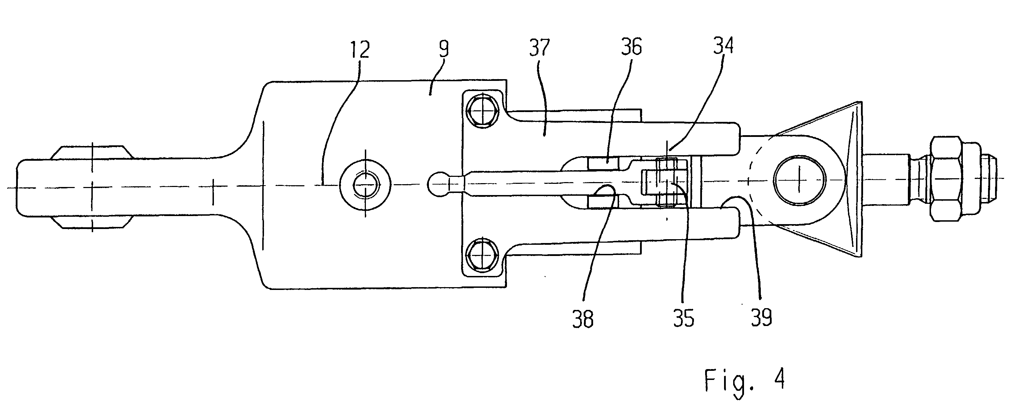

In den Figuren 2 und 3 ist der Kolben 16 in seiner aus dem Zylindergehäuse 9 voll ausgefahrenen Position dargestellt, so daß der Betätigungshebel 33 frei um die Schwenkachse 34 nach oben im rechtsschwenkenden Sinne bewegbar ist. Mit dem nach oben geschwenkten Betätigungshebel 33, der den Führungsschlitz 39 verlassen hat, kann das Stellelement 20 um die Längsachse 12 gedreht werden, so daß je nach Drehrichtung die Gewindestange 32 aus dem Stellelement 20 ein- oder ausfährt. Hierdurch verändert sich der Längenabstand zwischen den Anschlußmitteln 6,7 der Seitenstrebe 5. Erfolgt bei der in den Figuren 2 und 3 dargestellten eingeschwenkten, d.h. inaktiven Stellung oder Ruhestellung des Betätigungshebels 33 ein Einfahren des Kolbens 16 in das Zylindergehäuse 9, beispielsweise zu der Position, wie sie in Figur 4 dargestellt ist, so taucht der Betätigungshebel 33 so weit in den Führungsschlitz 39 ein, daß er selbst dann, wenn er ausgeschwenkt wird, nicht zu einer Drehverstellung des Stellelementes 20 genutzt werden kann. Dies erzeugt auch eine Sicherheit insofern, als eine Kategorieeinstellung bzw. eine Spieleinstellung bei angehängtem Gerät nur dann erfolgen kann, wenn sich die Unterlenker in der zentrierten Position befinden.

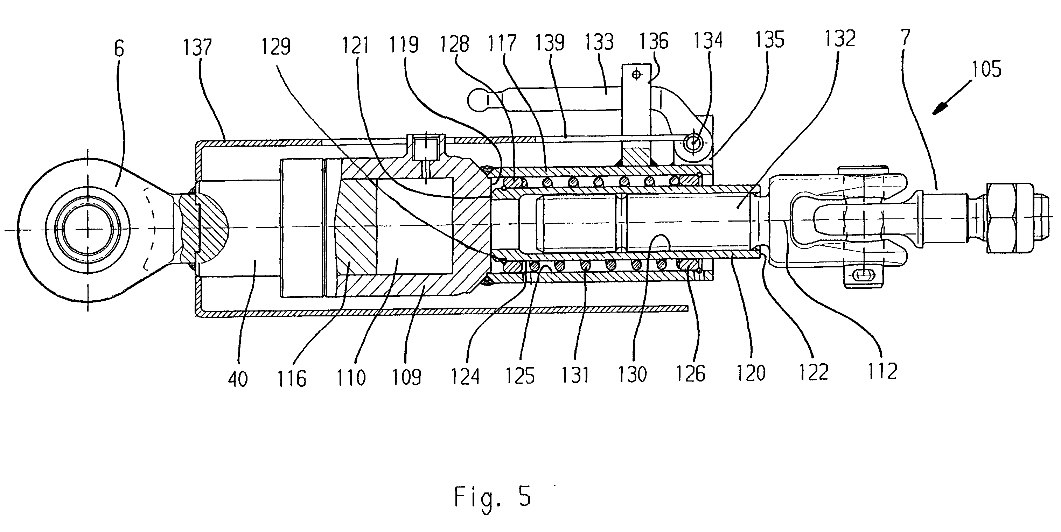

Figur 5 zeigt eine weitere Ausführungsform einer Seitenstrebe 105, bei der im Verhältnis zur Ausführungsform gemäß den Figuren 2 bis 5 für ähnliche Bauteile Bezugszeichen gewählt wurden, die zu denen der ersten Ausführungsform um die Zahl 100 erhöht sind. Insofern wird für deren Beschreibung zu der für die Figur 2 verwiesen. Nachfolgend werden jedoch die wesentlichen Unterschiede beschrieben.

Bei der Seitenstrebe 105 gemäß der zweiten Ausführungsform sind die ersten Anschlußmittel 6 über die Kolbenstange 40 direkt mit dem Kolben 116 verbunden. Das Zylindergehäuse 109 ist fest mit dem Hohlzylinder 117 verbunden. Dieser schließt sich axial auf der Längsachse 112 zentriert an das Zylindergehäuse 109 an. In diesem ist, wie im Zusammenhang mit den Figuren 2 bis 4 beschrieben, das Stellelement 120 mittels der Führungsringe 126 und 128 gegen die Kraft einer Druckfeder 131 von einer eingefahrenen Position, bei der die erste Stirnfläche 121 gegen die dem Zylindergehäuse 109 benachbarte Bodenfläche 119 anstößt, zu einer ausgefahrenen Position verlagerbar. In dem aus dem Hohlzylinder 117 vorstehenden Abschnitt des Stellelementes 120 ist ausgehend von der zweiten Stirnfläche 122 eine Gewindebohrung 130 angebracht, in der die Gewindestange 132, die die zweiten Anschlußmittel 7 trägt, verstellbar einsitzt.

Der Betätigungshebel 133 ist ebenfalls über einen Halter 135 an dem Stellelement 120 befestigt und an diesem um eine Schwenkachse 134 schwenkbar gehalten. Der Hohlzylinder 117 ist mit dem ersten Halteelement 136 versehen, das wie im Zusammenhang mit den Figuren 2 bis 4 beschrieben ausgestaltet ist. In Figur 5 ist der Betätigungshebel 133 in der Ruheposition gezeichnet. Des weiteren befindet sich der Kolben 116 in der voll ausgefahrenen Position. Das zweite Halteelement 137 ist rohrförmig gestaltet und koaxial zum Hohlzylinder 117 und Zylindergehäuse 109 angeordnet. Es ist an der Kolbenstange 40 festgelegt. Es weist von seinem den zweiten Anschlußmitteln 7 nahen Ende ausgehend einen Führungsschlitz 139 auf, der parallel zur Längsachse 112 verläuft und der, wie im Zusammenhang mit den Figuren 2 bis 4 beschrieben, einerseits das erste Halteelement 136 entlang der Längsachse 112 relativverstellbar aufnimmt, dieses aber in Drehrichtung undrehbar hält. Fährt der Kolben 116 in das Zylindergehäuse 109 ein, taucht auch der Betätigungshebel 133 in den Führungsschlitz 139 ein und eine Längenverstellung mittels der Gewindestange 132 und der Gewindebohrung 130 ist nicht mehr möglich. Der Führungsschlitz 139 hält nämlich den Betätigungshebel 133 selbst dann, wenn dieser aus der Ruheposition in eine Betätigungsposition verschwenkt wird, so daß das Stellelement 120 undrehbar ist.

Da normalerweise der Hub des Kolbens des Hydraulikzylinders auch im wesentlichen der Verstellmöglichkeit des Stellelementes im Hohlzylinder entspricht, ist das Stellelement auch dann undrehbar gehalten, wenn es gegen die Kraft der Druckfeder aus dem Hohlzylinder ausfährt. Dies gilt für beide Ausführungsformen.

### Bezugszeichenliste

- 1, 1': Unterlenker
- 2: Schwenkachse
- 3, 3': Befestigungsstelle
- 4: Kupplungshaken
- 5, 105: Seitenstrebe
- 6: erste Anschlußmittel
- 7: zweite Anschlußmittel
- 8: Traktorlängsachse
- 9, 109: Zylindergehäuse
- 10, 110: Zylinderraum
- 11: Anschlußbohrung
- 12, 112: Längsachse
- 13: Führungsbohrung
- 14: Abstreifer
- 15: Dichtung
- 16, 116: Kolben
- 17, 117: Hohlzylinder
- 18: Boden
- 19, 119: Bodenfläche
- 20, 120: Stellelement
- 21, 121: erste Stirnfläche
- 22, 122: zweite Stirnfläche
- 23: Anschlagring
- 24, 124: Außenfläche des Stellelementes
- 25, 125: Innenfläche
- 26, 126: erster Führungsring
- 27: Sicherungsring
- 28, 128: zweiter Führungsring
- 29, 129: Sicherungsring
- 30, 130: Gewindebohrung
- 31, 131: Druckfeder
- 32, 132: Gewindestange
- 33, 133: Betätigungshebel
- 34, 134: Schwenkachse
- 35, 135: Halter
- 36, 136: erstes Halteelement
- 37, 137: zweites Halteelement
- 38: Gabelöffnung
- 39, 139: Führungsschlitz
- 40: Kolbenstange

- A: Spreizmaß
- L1, L2, L1', L2': Länge
- R: Radius
- S: Seitenbewegung

## Patentansprüche

1. Seitenstrebe (5, 105) für einen Unterlenker (1, 1') eines Traktors, umfassend
- einen einfach wirkenden Hydraulikzylinder mit einem Kolben (16, 116) und einem Zylindergehäuse (9, 109) als Bauteilen,
- eine Stelleinheit,
die einen Hohlzylinder (17, 117) mit einer Längsachse (12, 112), ein stangenförmiges Stellelement (20, 120), das im Hohlzylinder (17, 117) entlang der Längsachse (12, 112) zwischen einer eingefahrenen und einer ausgefahrenen Stellung verstellbar ist und das eine Gewindebohrung (30, 130) besitzt, die auf der Längsachse (12, 112) zentriert ist und von einer aus dem Hohlzylinder (17, 117) herausragenden zweiten Stirnfläche (22, 122) ausgeht, ferner einen Betätigungshebel (33, 133), der an dem aus dem Hohlzylinder (17, 117) herausragenden Ende des Stellelementes (20, 120) angebracht ist und des weiteren ein erstes Halteelement (36, 136), das außen an dem dem Zylindergehäuse (9, 109) entfernten Ende des Hohlzylinders (17, 117) angebracht ist und an dem der Betätigungshebel (33, 133), eine Drehung des Stellelementes (20, 120) zum Hohlzylinder (17, 117) verhindernd, eine Relativverstellung derselben zueinander entlang der Längsachse (12, 112) jedoch zulassend festlegbar ist, aufweist,
- eine Gewindestange (32, 132), die in der Gewindebohrung (30, 130) des Stellelementes (20, 120) verstellbar einsitzt, und
- ein zweites Haltelement (37, 137),
das an einem der Bauteile (16, 116, 9, 109) des Hydraulikzylinders festgelegt ist und einerseits das erste Halteelement (36, 136) zu dem Bauteil undrehbar und entlang der Längsachse (12, 112) dazu relativverstellbar hält und andererseits bei einer von der voll ausgefahrenen Position des Kolbens (16, 116) abweichenden Stellung das Stellelement (20, 120) undrehbar hält.

2. Seitenstrebe nach Anspruch 1,
**dadurch gekennzeichnet,**
**daß** der Hohlzylinder (17) Teil des Kolbens (16) des Hydraulikzylinders ist.

3. Seitenstrebe nach Anspruch 1,
**dadurch gekennzeichnet,**
**daß** der Hohlzylinder (117) mit dem Zylindergehäuse (109) des Hydraulikzylinders verbunden ist.

4. Seitenstrebe nach den Ansprüchen 1 und 2,
**dadurch gekennzeichnet,**
**daß** das zweite Halteelement (37) am Zylindergehäuse (9) angebracht ist, wobei das erste Halteelement (36) entlang der Längsachse (12) am zweiten Haltelement verstellbar geführt ist und in Drehrichtung um die Längsachse (12) undrehbar gehalten ist.

5. Seitenstrebe nach den Ansprüchen 1 und 3,
**dadurch gekennzeichnet,**
**daß** das zweite Halteelement (137) am Kolben (116) festgelegt ist, wobei das erste Halteelement (136) entlang der Längsachse (112) am zweiten Halteelement (137) verstellbar geführt ist und in Drehrichtung um die Längsachse (112) unverstellbar gehalten ist.

6. Seitenstrebe nach Anspruch 1,
**dadurch gekennzeichnet,**
**daß** der Betätigungshebel (33, 133) um eine Schwenkachse (34, 134), die die Längsachse (12, 112) mit Abstand rechtwinklig kreuzt, schwenkbar am Stellelement (20, 120) angebracht ist und daß das erste Halteelement (36, 136) gabelartig gestaltet ist und eine Gabelöffnung (38) aufweist, in welche der Betätigungshebel (33, 133) im Ruhezustand eingreift.

7. Seitenstrebe nach einem der Ansprüche 4 oder 5,
**dadurch gekennzeichnet,**
**daß** der Betätigungshebel (33, 133) in Eingriff zu einem Führungsschlitz (39) ist, wenn der Kolben (16, 116) im Zylindergehäuse (9, 109) eine von der voll ausgefahrenen Stellung abweichende Stellung einnimmt.

8. Seitenstrebe nach einem der Ansprüche 4 oder 5,
**dadurch gekennzeichnet,**
**daß** das zweite Halteelement (37, 137) einen Führungsschlitz (39, 139), der parallel zur Längsachse (12, 112) verläuft, aufweist, wobei das erste Halteelement (36, 136) in dem Führungsschlitz (39, 139) geführt ist.

9. Seitenstrebe nach einem der Ansprüche 4 oder 5,
**dadurch gekennzeichnet,**
**daß** das zweite Halteelement (37) als Blechteil gestaltet ist, das parallel zur Längsachse (12) angeordnet ist und axial vom Zylindergehäuse (9) vorsteht.

10. Seitenstrebe nach einem der Ansprüche 4 oder 5,
**dadurch gekennzeichnet,**
**daß** das zweite Halteelement (137) rohrförmig gestaltet ist und den Hohlzylinder (117) koaxial umgibt.

## Claims

1. Side strut (15, 105) for a lower steering arm (1, 1') of a tractor, comprising
- a single-action hydraulic cylinder, having a piston (16, 116) and a cylinder housing (9, 109) as components,
- a setting unit,
having a hollow cylinder (17, 117) with a longitudinal axis (12, 112), a rod-shaped setting element (20, 120), movable in the hollow cylinder (17, 117) along the longitudinal axis (12, 112) between a moved-in and a moved-out position and which setting element (20, 120) having a threaded bore (30, 130), centred on the longitudinal axis (12, 112) and starting from a second end face (22, 122) projecting from the hollow cylinder (17, 117), and further with an actuating lever (33, 133) attached to the end of the setting element (20, 120) projecting from the hollow cylinder (17, 117), and furthermore with a first holding element (36, 136) attached on the outside to the end of the hollow cylinder (17, 117) removed from the cylinder housing (17, 117) and on which the actuating lever (33, 133) is retainable in such a way, that a rotation of the setting element (20, 120) relative to the hollow cylinder (17, 117) is prevented and that a relative displacement of the same towards each other along the longitudinal axis (12, 112) is possible,
- a threaded rod (32, 132), inserted into the threaded bore (30, 130) of the setting element (20, 120) in an adjustable manner, and
- a second holding element (37, 137), attached to one of the components (16, 116, 9, 109) of the hydraulic cylinder and holding on the one hand the first holding element (36, 136) in a non-rotatable manner to the component and adjustable along the longitudinal axis (12, 112) relative thereto and on the other hand in a position deviating from the completely moved-out position of the piston (16, 116) holding the setting element (20, 120) in a non-rotatable manner.

2. Side strut according to claim 1,
**characterised in that**
the hollow cylinder (17) is part of the piston (16) of the hydraulic cylinder.

3. Side strut according to claim 1,
**characterised in that**
the hollow cylinder (117) is connected to the cylinder housing (109) of the hydraulic cylinder.

4. Side strut according to claims 1 and 2,
**characterised in that**
the second holding element (37) is attached to the cylinder housing (9), wherein the first holding element (36) is guided adjustably along the longitudinal axis (12) on the second holding element and is held non-rotatably in rotational direction around the longitudinal axis (12).

5. Side strut according to the claims 1 and 3,
**characterised in that**
the second holding element (137) is attached to the piston (116), wherein the first holding element (136) is guided adjustably along the longitudinal axis (112) on the second holding element (137) and is held non-rotatably in rotational direction around the longitudinal axis (112).

6. Side strut according to claim 1,
**characterised in that**
the actuating lever (33, 133) is attached to the setting element (20, 120) pivotably around a pivot axis (34, 134), intersecting at a right angle the longitudinal axis (12, 112) with a distance in-between, and that the first holding element (36, 136) is formed yoke-like and has a yoke opening, into which the actuating lever (33, 133) in the resting condition engages.

7. Side strut according to one of claims 4 or 5,
**characterised in that**
the actuating lever (33, 133) engages in a guiding slot (39), when the piston (16, 116) takes up a position in the cylinder housing (9, 109) , deviating from the fully moved-out position.

8. Side strut according to one of claims 4 or 5,
**characterised in that**
the second holding element (37, 137) has a guiding slot (39, 139), extending parallel to the longitudinal axis (12, 112), wherein the first holding element (36, 136) is guided in the guiding slot (39, 139).

9. Side strut according to one of claims 4 or 5,
**characterised in that**
the second holding element (37) is formed as a plate metal part, arranged parallel to the longitudinal axis (12) and projecting axially from the cylinder housing (9).

10. Side strut according to one of claims 4 or 5,
**characterised in that**
the second holding element (137) is formed tubular in shape and surrounds coaxially the hollow cylinder (117).

## Revendications

1. Traverse latérale (5, 105) pour un bras de suspension inférieur (1, 1') d'un tracteur, comportant
- un vérin hydraulique à simple effet avec un piston (16, 116) et avec un boîtier de vérin (9, 109) comme composants,
- une unité de positionnement
qui possède un cylindre creux (17, 117) avec un axe longitudinal (12, 112), un élément de positionnement (20, 120) en forme de barre et déplaçable dans le cylindre creux (17, 117) le long de l'axe longitudinal (12, 112) entre une position rentrée et une position sortie, et un perçage taraudé (30, 130) centré sur l'axe longitudinal (12, 112) et partant d'une deuxième surface frontale (22, 122) dépassant hors du cylindre creux (17, 117), et qui possède en outre un levier d'actionnement (33, 133) agencé à l'extrémité de l'élément de positionnement (20, 120) dépassant hors du cylindre creux (17, 117), et de plus un premier élément de retenue (36, 136) qui est agencé à l'extérieur à l'extrémité du cylindre creux (17, 117) éloignée du boîtier de vérin (9, 109) et sur lequel peut être immobilisé le levier d'actionnement (33, 133) en interdisant une rotation de l'élément de positionnement (20, 120) par rapport au cylindre creux (17, 117) mais en permettant un déplacement relatif de ceux-ci l'un par rapport à l'autre le long de l'axe longitudinal (12, 112),
- une barre filetée (32, 132) qui repose avec faculté de déplacement dans le perçage taraudé (30, 130) de l'élément de positionnement (20, 120),
- un deuxième élément de retenue (37, 137) qui est immobilisé sur l'un des composants (16, 116, 9, 109) du vérin hydraulique et qui, d'une part, maintient le premier élément de retenue (36, 136) en interdisant une rotation par rapport au composant et en permettant un déplacement relatif par rapport à celui-ci le long de l'axe longitudinal (12, 112), et qui, d'autre part, maintient l'élément de positionnement (20, 120) en interdisant une rotation dans une position qui diffère de la position complètement sortie du piston (16, 116).

2. Traverse latérale selon la revendication 1, **caractérisée en ce que** le cylindre creux (17) fait partie du piston (16) du vérin hydraulique.

3. Traverse latérale selon la revendication 1, **caractérisée en ce que** le cylindre creux (117) est relié au boîtier (109) du vérin hydraulique.

4. Traverse latérale selon les revendications 1 et 2, **caractérisée en ce que** le deuxième élément de retenue (37) est agencé sur le boîtier de vérin (9), le premier élément de retenue (36) étant guidé avec faculté de déplacement le long de l'axe longitudinal (12) sur le deuxième élément de retenue et étant retenu de manière à ne pas pouvoir tourner en direction de rotation autour de l'axe longitudinal (12).

5. Traverse latérale selon les revendications 1 et 3, **caractérisée en ce que** le deuxième élément de retenue (137) est immobilisé sur le piston (116), le premier élément de retenue (136) étant guidé avec faculté de déplacement le long de l'axe longitudinal (112) sur le deuxième élément de retenue (137) et étant retenu de manière à ne pas être déplacé en direction de rotation autour de l'axe longitudinal (112).

6. Traverse latérale selon la revendication 1, **caractérisée en ce que** le levier d'actionnement (33, 133) est agencé sur l'élément de positionnement (20, 120) avec faculté de pivotement autour d'un axe de pivotement (34, 134) qui croise à distance et à angle droit l'axe longitudinal (12, 112), et **en ce que** le premier élément de retenue (36, 136) est réalisé en forme de fourche et présente une ouverture de fourche (38) dans laquelle s'engage le levier d'actionnement (33, 133) dans l'état de repos.

7. Traverse latérale selon l'une ou l'autre des revendications 4 et 5, **caractérisée en ce que** le levier d'actionnement (33, 133) est en engagement vers une fente de guidage (39) lorsque le piston (16, 116) dans le boîtier de vérin (9, 109) occupe une position qui diffère de la position complètement sortie.

8. Traverse latérale selon l'une ou l'autre des revendications 4 et 5, **caractérisée en ce que** le deuxième élément de maintien (37, 137) présente une fente de guidage (39, 139) qui s'étend parallèlement à l'axe longitudinal (12, 112), le premier élément de retenue (36, 136) étant guidé dans la fente de guidage (39, 139).

9. Traverse latérale selon l'une ou l'autre des revendications 4 et 5, **caractérisée en ce que** le deuxième élément de retenue (37) est réalisé sous forme de pièce en tôle qui est agencée parallèlement à l'axe longitudinal (12) et qui fait saillie axialement du boîtier de vérin (9).

10. Traverse latérale selon l'une ou l'autre des revendications 4 et 5, **caractérisée en ce que** le deuxième élément de retenue (137) est réalisé en forme de tube et entoure coaxialement le cylindre creux (117).
